# EUROPÄISCHE PATENTANMELDUNG

(11) **EP 4 471 374 A1**
(43) Veröffentlichungstag der Anmeldung: **04.12.2024**
(21) Anmeldenummer: 24020177.2
(22) Anmeldetag: 29.05.2024
(51) Int. Cl.: G01C 15/06

(54) **MESSSTAB ZUR VERWENDUNG IN EINEM LASERNIVELLIERUNGSSYSTEM**

(30) Priorität: 01.06.2023 AT 702023
(71) Anmelder: Singa GmbH, 4694 Ohlsdorf bei Gmunden (AT)
(72) Erfinder: Kaiser-Mühlecker, Benedikt, 4531 Kematen an der Krems (AT)

(57) **Zusammenfassung**

Die Erfindung betrifft einen Messstab zur Verwendung in einem Lasernivellierungssystem, wobei der Messstab einen inneren Längsteil (1) und einen dazu längsverschiebbaren äußeren Längsteil (2) aufweist, wobei an einem der Längsteile (1, 2) eine Markierung (3) angebracht ist und sich entlang der Längsrichtung des anderen der Längsteile (2, 1) eine Längenmaßskala (4) erstreckt, wobei die Markierung (3) am einen Längsteil (1, 2) in Längsrichtung dieses Längsteils verschiebbar und an wählbaren Positionen lösbar fixierbar ist, und/oder die Längenmaßskala (4) am anderen Längsteil (2, 1) in Längsrichtung dieses anderen Längsteils (2, 1) verschiebbar und an wählbaren Positionen lösbar fixierbar ist. Parallel zur Längenmaßskala (4) verläuft eine Stützelementeskala (14), auf welcher die dargestellten Längeneinheiten den wirksamen Längen von Module (15, 16, 17) einer aus mehreren dieser Module zusammenfügbaren Fußstütze entsprechen.

## Beschreibung

Die Erfindung betrifft einen Messstab zur Verwendung in einem Lasernivellierungssystem.

Ein Lasernivellierungssystem im Sinne dieser Dokumentes ist ein System, welches zumindest einen Lasersender und einen Messstab umfasst, wobei der Lasersender dazu beschaffen ist, in viele Richtungen, welche allesamt in einer gemeinsamen horizontalen Ebene liegen, Lichtstrahlen auszusenden, und wobei der Messstab dazu beschaffen ist, das Quantifizieren von Höhendifferenzen zwischen einem Punkt, an welchem ein Laserstrahl des Lasersenders auf ihn trifft, und einem Ende des Messstabes zu ermöglichen.

Der in der US 6584697 B1 gezeigte Messstab eines Lasernivellierungssystems umfasst einen inneren Längsteil und einen dazu parallel ausgerichteten äußeren Längsteil, welcher entlang des inneren Längsteils längsverschiebbar ist, kürzer ist als der innere Längsteil, und die Mantelfläche des inneren Längsteils mit seiner Mantelfläche umschließt. Der äußere Längsteil weist in vorgegebener Position eine Befestigungsstelle für einen Laserempfänger auf. Der innere Längsteil ist mit einer entlang seiner Längsrichtung verlaufenden Längenmaßskala versehen. Zur Bestimmung der Höhenlage eines Punktes auf einer vorhandenen Fläche wird die unterste Fläche des inneren Längsteils auf diesen Punkt aufgesetzt, der Messstab vertikal ausgerichtet und der äußere Längsteil so lange vertikal verschoben, bis der vom Lasersender ausgesendete Strahl - welcher in einer horizontalen Ebene liegt - an einer Sollmarkierung auf dem am äußeren Längsteil befestigten Laserempfänger detektiert wird. An der Längenmaßskala am inneren Längsteil ist jene Höhenangabe, welche an jener Stelle ablesbar ist, welche gleich hoch liegt wie das untere Ende des äußeren Längsteils, genau die Höhendifferenz zwischen der Sollmarkierung am Laserempfänger und dem Punkt auf der zu vermessenden Fläche. Wenn also der Laserstrahl auf der Sollmarkierung detektiert wird, bedeutet besagtes Maß an der Längenmaßskala die Höhendifferenz zwischen der horizontalen Ebene, in welcher der Laser Licht aussendet, und dem Fußpunkt des Messstabes.

Die US 6011628 A und die EP 2179251 B1 zeigen Messstäbe, welche sich zu jenem gemäß der US 6584697 B1 im Wesentlichen nur dadurch unterscheiden, dass die zum Ablesen der Höhe dienende Längenmaßskala am äußeren Längsteil angebracht ist und nicht an dem durch den äußeren Längsteil durchgeführten längeren inneren Längsteil. Das führt zu komfortablerer Ablesbarkeit. Um dies zu erreichen ist die Mantelfläche des äußeren Längsteils entlang der Längenmaßskala durch einen Schlitz durchbrochen, durch welchen hindurch ein Markierungsgegenstand sichtbar ist, welcher in unveränderbarer Position mit dem inneren Längsteil starr verbunden ist. An der Längenmaßskala am äußeren Längsteil bedeutet jene Höhenangabe, welche an jener Stelle ablesbar ist, welche gleich hoch liegt wie der am inneren Längsteil verankerte Markierungsgegenstand, genau die Höhendifferenz zwischen der Sollmarkierung am Laserempfänger und dem Punkt auf der zu vermessenden Fläche. Wenn also der Laserstrahl auf der Sollmarkierung detektiert wird, bedeutet besagtes Maß an der Längenmaßskala die Höhendifferenz zwischen der horizontalen Ebene, in welcher der Laser Licht aussendet, und dem Fußpunkt des Messstabes.

Die US 6662458 B1 zeigt einen Messstab bei welchem zwei Stäbe an einer Schwalbenschwanzführung aneinander geführt sind, wobei einer der beiden Stäbe eine Nut für das lösbare Befestigen einer Längenmaßskala aufweist - womit es wählbar wir, ob beispielsweise eine auf Zentimeter oder auf Zoll basierende Längenmaßskala verwendet wird.

Die US 2006283030 A1 zeigt einen Messstab eines Lasernivellierungssystems welcher gegenüber jenen aus den Schriften US 6011628 A und EP 2179251 B1 dahingehend weiterentwickelt ist, dass der Markierungsgegenstand am inneren Längsteil in Längsrichtung dieses Längsteils verschiebbar und an wählbaren Positionen lösbar fixierbar ist. Damit wird erreichbar, dass die an der Längenmaßskala abgelesene Wert direkt die Höhendifferenz zwischen einer zu vermessenden Fläche und dem gewünschten Niveau einer darüber einzurichtenden horizontalen Fläche anzeigt.

Gleiches wird gemäß der US 7448138 B1 erreichbar, indem die Längenmaßskala an einem der Längsteile in Längsrichtung dieses Längsteils verschiebbar und an wählbaren Positionen lösbar fixierbar ist.

Von diesem Stand der Technik ausgehend liegt die der Erfindung zu Grunde liegende erste Aufgabe darin, einen Messstab bereitzustellen, welcher bei ansonsten vergleichbar guten Eigenschaften gegenüber den vorbesprochenen Bauweisen dahingehend verbessert ist, dass mit seiner Hilfe die Höhendifferenz zwischen einem zu vermessenden Punkt auf einer vorhandenen Fläche und einer horizontalen Fläche, welche in definierter Höhe über dem zu vermessenden Punkt einzurichten ist, direkt als Anzahlen von Modulen einer aus mehreren Modulen zusammensetzbaren Fußbodenstütze erkennbar ist.

Für das Lösen der Aufgabe werden von den vorbesprochenen Bauweisen die Merkmale übernommen, dass ein äußerer Längsteil mit seiner Mantelfläche die Mantelfläche eines inneren Längsteils umschließt, dass der äußere Längsteil entlang des inneren Längsteils längsverschiebbar ist, dass an einem der Längsteile eine Markierung angebracht ist und, dass sich am anderen der Längsteile eine Längenmaßskala in dessen Längsrichtung erstreckt, wobei sich die Markierung an einem Längsteil bezüglich der Position in Längsrichtung des anderen Längsteils in jenem Längsbereich befindet, an welchem sich auch die Längenmaßskala am anderen Längsteil befindet, und wobei die Markierung und die Längenmaßskala gemeinsam sichtbar sind (- sodass erkennbar ist, an welchem Wert der Längenmaßskala sich die Markierung befindet).

Weiters ist die Markierung am einen Längsteil in Längsrichtung des einen Längsteils verschiebbar und an wählbaren Positionen lösbar fixierbar befestigt und/oder die Längenmaßskala ist am anderen Längsteil in Längsrichtung des anderen Längsteils verschiebbar und an wählbaren Positionen lösbar fixierbar befestigt.

Durch diese einfach zu realisierende Maßnahme wird die Möglichkeit geboten, am Messstab dann, wenn sich bei vertikal ausgerichtetem Messstab die unterste Fläche des einen, nicht mit einem Laserempfänger ausgestatteten Längsteils auf jenem Höhenniveau befindet, auf welchem eine horizontalen Ebene auszubilden ist, und sich der andere, schon mit einem Laserempfänger ausgestattete Längsteil auf einer Höhe befindet, bei welcher der horizontal verlaufende Laserstrahl eines Lasersenders in der Höhe der Sollmarkierung des Laserempfängers detektiert wird, die Markierung am einen Längsteil und die Längenmaßskala am anderen Längsteil so relativ zueinander zu verschieben, dass sich die mit dem einen Längsteil verbundene Markierung genau auf der Höhe des Nullpunktes der mit dem anderen Längsteil verbundenen Längenmaßskala befindet und daraufhin die weitere Verschiebbarkeit der Markierung gegenüber dem einen Längsteil bzw. der Längenmaßskala gegenüber dem anderen Längsteil zu fixieren. Wenn in weiterer Folge der Messstab mit dem unteren Ende des einen Längsteils auf einen zu vermessenden Punkt auf der vorhandenen Fläche aufgesetzt wird und bei senkrechtem Messstab der mit dem Laserempfänger ausgestattete andere Längsteil so verschoben wird, dass der Laserstrahl wieder in Höhe der Sollmarkierung am Laserempfänger detektiert wird, liegt die an einem der Längsteile befestigte Markierung bezüglich der Längenmaßskala am anderen Längsteil genau in der Höhe jener Maßangabe, welche die Höhendifferenz zwischen dem zu vermessenden Punkt auf der vorhandenen Fläche und der zu bildenden Ebene angibt. Die besagte Höhendifferenz kann somit ohne weiteres Merken und Berechnen direkt abgelesen werden.

Die Erfindung wird an Hand zweier stilisierter Zeichnungen von einem beispielhaften vorteilhaften Messstab einschließlich optionaler zusätzlicher Merkmale und dem jeweils damit erreichbaren Nutzen näher erläutert.

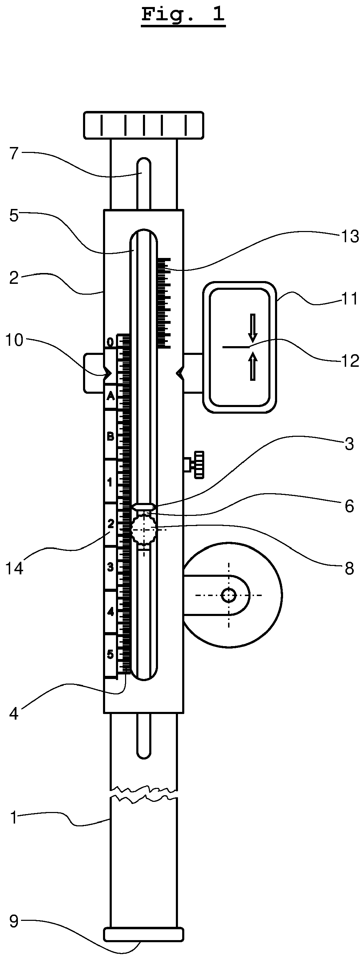

- Fig. 1:: Zeigt einen beispielhaften erfindungsgemäßen Messstab in Frontalansicht.
- Fig. 2:: Zeigt jeweils in Frontalansicht Module einer beispielhaften modular aufgebauten Fußbodenstütze, welche für das Zusammenwirken mit dem Messstab von Fig. 1 und Fig. 3 konzipiert ist.
- Fig. 3:: Zeigt aus der gleichen Blickrichtung wie Fig. 1 den Messstab von Fig. 1 in Teilschnittansicht, ausgerüstet mit einem speziellen Bodenteil.

Der dargestellte Messstab umfasst unter anderem einen längeren inneren Längsteil 1 und einen kürzeren äußeren Längsteil 2, welcher die Mantelfläche des inneren Längsteils 1 mit seiner Mantelfläche umschließt. Die beiden Längsteile 1, 2 sind parallel zueinander ausgerichtet und aneinander in ihrer Längsrichtung verschiebbar.

Am inneren Längsteil 1 ist eine Markierung 3 angebracht. Am äußeren Längsteil 2 ist eine Längenmaßskala 4 angebracht, welche entlang der Längsrichtung des äußeren Längsteils 2 verläuft. Der Längenbereich am inneren Längsteil 1, in welchem die Markierung 3 am inneren Längsteil 1 einstellbar fixierbar ist, und der Längenbereich am äußeren Längsteil 2, über welchen sich die Längenmaßskala 4 erstreckt, überlappen einander. Die Längenmaßskala 4 und die Markierung 3 sind gut gemeinsam sichtbar. Bei der vorliegenden beispielhaften Ausführung wird das damit erreicht, dass entlang der Längenmaßskala 4 ein offener Schlitz 5 im äußeren Längsteil 2 verläuft, durch welchen hindurch die am inneren Längsteil 1 angebrachte Markierung 3 sichtbar ist.

Bei der vorliegenden beispielhaften Ausführung ist die Markierung 3 entlang der Längsrichtung des inneren Längsteils 1 verschiebbar und an wählbarer Stelle mit dem inneren Längsteil starr, aber lösbar verbindbar. Die am äußeren Längsteil 2 angebrachte Längenmaßskala hingegen ist in diesem Beispiel gegenüber dem äußeren Längsteil nicht verschiebbar. Die Verschiebbarkeit und wählbare Fixierbarkeit der Markierung 3 gegenüber dem inneren Längsteil 1 wird in diesem beispielhaften Fall dadurch erreicht, dass die Markierung 3 Teil einer hammerkopfartigen Gewindemutter 6 ist, welche entlang eines weiteren Schlitzes 7 verschiebbar ist und mit einer Griffschraube 8 fixierbar ist. Der innere Längsteil 1 ist dabei überwiegend als Hohlprofil ausgebildet und der weitere Schlitz 7 verläuft in einer Mantelflächenseite dieses Hohlprofils entlang dessen Längsrichtung.

Am vorliegenden Beispiel ist der innere Längsteil 1 dazu vorgesehen, bei vertikal ausgerichtetem Messstab mit seiner untersten Fläche 9, welche die untere Fläche einer auf das erwähnte Hohlprofil aufgesteckten Endkappe ist, auf die vorgegebene Fläche gestellt zu werden, und der äußere Längsteil 2 ist dazu vorgesehen, in der Höhe verschoben zu werden. Deswegen ist der äußere Längsteil 2 mit einer Struktur 10 versehen, mit deren Hilfe ein Laserempfänger 11 in vorgegebener Position am äußeren Längsteil fixierbar ist.

Der Laserempfänger 11 weist eine Sollmarkierung 12 auf, welche sich bei diesem Beispiel dann, wenn der Messstab vertikal ausgerichtet ist und der Laserempfänger korrekt am äußeren Längsteil 2 montiert ist, auf der Höhe des Nullpunktes der Längenmaßskala 4 befindet. Bei üblichen Bauweisen von Lasernivellierungssystemen, welche zusätzlich zu einem Lasersender und einem Messstab auch einen Laserempfänger 11 aufweisen, hat der Laserempfänger 11 eine sich in vertikaler Richtung erstreckende Sensorfläche für auftreffendes Laserlicht. Dabei signalisiert der Laserempfänger 11 optisch und/oder akustisch, ob der vom Lasersender ankommende Laserstrahl, ober, unter oder genau auf der Sollmarkierung 12 auftrifft. Wenn die Sichtverhältnisse ausreichend gut sind, dass der Auftreffpunkt des Laserstrahls auf der Längenmaßskala 4 direkt gesehen werden kann, kann der Messstab auch ohne Laserempfänger 11 verwendet werden. An Stelle auf die Signalisierung durch den Laserempfänger 11 zu achten, kann dann einfach durch Hinsehen geprüft werden, ob sich der Auftreffpunkt des Laserstrahls auf der Höhe des Nullpunktes der Längenmaßskala 4 befindet.

Der dargestellte beispielhafte erfindungsgemäße Messstab zeigt mehrere optionale Zusatzmerkmale, welche Zusatznutzen stiften:
Als eine erste optionale Ergänzung zur Längenmaßskala 4 weist der Messstab eine des Weiteren als "Versatzmaßskala 13" bezeichnete erste zusätzliche Skala auf, welche auch ein Längenmaß bedeutet. Auch hier ist es so, dass sich der Längenbereich am inneren Längsteil 1, in welchem die Markierung 3 am inneren Längsteil 1 einstellbar fixierbar ist, und der Längenbereich am äußeren Längsteil 2, über welchen sich die Versatzmaßskala 13 erstreckt, überlappen und, dass die Versatzmaßskala 13 und die Markierung 3 gemeinsam sichtbar sind. Die Versatzmaßskala 13 erstreckt sich in Längsrichtung des äußeren Längsteils zumindest vom Nullpunkt der Längenmaßskala 4 entgegen der Hauptrichtung der Längenmaßskala 4, also beim bestimmungsgemäß im Einsatz befindlichen Messstab vom Nullpunkt der Längenmaßskala 4 aus nach oben hin.

Die Versatzmaßskala 13 ist in dem nachfolgend beschriebenen Einsatzfall sehr nutzbringend:
Es kommt häufig vor, dass an einem Bauwerk oberhalb einer schon vorhandenen, im Prinzip beliebig geformten "Rohfläche" ein waagrecht ausgerichteter Fußboden zu bilden ist, wobei sowohl das Höhenniveau der begehbaren Oberfläche des Fußbodens als auch die vertikale Abmessung der Fußbodenelemente bekannt sind. Auf der vorhandenen Rohfläche sind dann Erhebungen anzuordnen, beispielsweise Fußbodenstützen, welche vom jeweiligen Punkt der Rohfläche aus in die Höhe ragen müssen und zwar um das Maß des vertikalen Abstandes zwischen der Rohfläche und der begehbaren Oberfläche des Fußbodens minus der vertikalen Abmessung der Fußbodenelemente. Üblicherweise wird in einem frühen Stadium an dem Bauwerk ein Gegenstand so angeordnet, dass seine zuoberst liegende Fläche genau auf dem Höhenniveau der begehbaren Oberfläche des zu bildenden Fußbodens liegt. Auf diese Fläche wird dann der Messstab mit vertikaler Ausrichtung mit der untersten Fläche 9 des längeren inneren Längsteils 1 aufgesetzt und der noch höhenverschiebbare äußere Längsteil 2, welcher ggf. den Laserempfänger 11 trägt, wird so verschoben, dass der Laserstrahl des Lasersenders auf die Sollmarkierung 12 bzw. auf den Nullpunkt der Längenmaßskala 4 trifft. Während der Laserstrahl auf die Sollmarkierung 12 bzw. auf den Nullpunkt der Längenmaßskala 4 trifft, wird die Markierung 3 am inneren Längsteil 1 so verschoben, dass sie sich um die vertikale Abmessung der Fußbodenelemente über dem Nullpunkt der Längenmaßskala 4 und damit genau an jenem Punkt der Versatzmaßskala befindet, an welchem diese den Betrag der vertikalen Abmessung der Fußbodenelemente anzeigt. In dieser Position wird die Markierung 3 am inneren Längsteil 1 fixiert.

In weiterer Folge wird an Punkten der vorgegebenen Rohfläche mit Hilfe des Messstabes eruiert, wie hoch eine dort anzubringende Erhebung - beispielsweise Fußbodenstütze - sein muss, damit sie Fußbodenelemente in der richtigen Höhe tragen kann. Dazu wird der Messstab mit seiner untersten Fläche 9 am jeweiligen Punkt auf der vorgegebenen Rohfläche aufgesetzt und der äußere Längsteil 2 so in der Höhe verschoben, dass der Laserstrahl wieder auf die Sollmarkierung 12 bzw. auf den Nullpunkt der Längenmaßskala 4 trifft. Die Markierung 3 befindet sich dann bezüglich der Längenmaßskala 4 genau an jener Maßangabe, welche der Höhe der am betreffenden Punkt der Rohfläche zu errichtenden Erhebung entspricht. Damit ist es während des Eruierens der Höhen der Erhebungen, die an den einzelnen Punkten der Rohfläche zu bilden sind, nicht mehr nötig sich die Dicke der Bodenelemente zu merken und irgendwie damit zu rechnen.

Am vorliegenden Beispiel ist die Versatzmaßskala 13 gegenüber der Längenmaßskala 4 in horizontaler Richtung versetzt angeordnet. Sie könnte aber auch einfach eine in vertikaler Richtung über den Nullpunkt der Längenmaßskala nach oben hin ausgebildete Verlängerung der Längenmaßskala 4 sein.

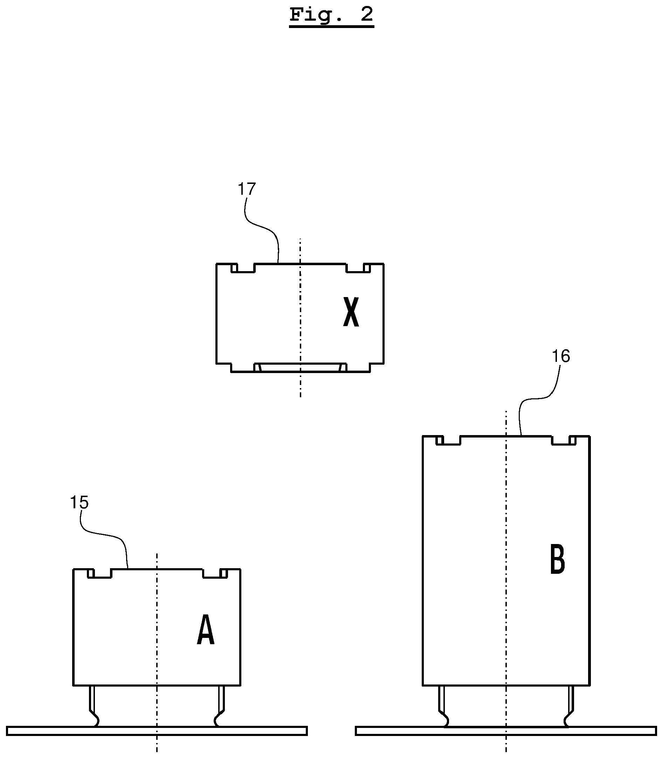

Als eine weitere optionale Ergänzung zur Längenmaßskala 4 weist der Messstab eine des Weiteren als "Stützelementeskala 14" bezeichnete weitere Skala auf, welche auch das Maß einer Länge beschreibt, allerdings nicht in üblichen Längenmaßeinheiten, sondern in Anzahlen von Modulen einer aus mehreren Modulen zusammensetzbaren Fußbodenstütze. Dazu passende beispielhafte Einzelmodule einer dazu passenden beispielhaften Fußbodenstütze sind in Fig. 2 skizziert.

Fig. 2 zeigt einen Satz von drei zueinander unterschiedlichen Modulen, welche dazu ausgelegt sind, zum Teil allein, zum Teil in Kombination mit einem oder mehreren anderen Modulen, eine Fußbodenstütze zu bilden, welche im bestimmungsgemäßen Einsatz den Abstand zwischen einer zumindest annähernd horizontalen Gebäudefläche und einem Fußbodenelement überbrücken, wobei das Fußbodenelement oberhalb der Gebäudefläche angeordnet ist und durch die Fußbodenstütze zur Gebäudefläche hin abgestützt wird.

Der Satz von Modulen gemäß Fig. 2 weist ein niedriges Bodenmodul 15 auf, welches einen Bolzenteil und einen Mutternteil umfasst, die miteinander in Gewindeeingriff sind, wobei die Achse des Gewindes vertikal ausgerichtet ist. Durch Relativdrehung des Mutternteils gegenüber dem Bolzenteil um die Achse des Gewindes ist die Höhe des Bodenmoduls stufenlos einstellbar.

Weiters weist der Satz von Modulen gemäß Fig. 2 ein hohes Bodenmodul 16 auf, welches einen längeren Bolzenteil und einen längeren Mutternteil umfasst, die ebenso miteinander in Gewindeeingriff sind, wobei die Achse des Gewindes vertikal ausgerichtet ist. Durch Relativdrehung des Mutternteils gegenüber dem Bolzenteil um die Achse des Gewindes ist die Höhe des Bodenmoduls stufenlos einstellbar.

Drittens weist der Satz von Modulen gemäß Fig. 2 ein Adaptermodul 17 auf, welches auf den Mutternteil vom hohen Bodenmodul 16 oben aufsteckbar und drehfest mit diesem verbindbar ist. Das Adaptermodul 17 ist so beschaffen, dass es mit gleichartigen Adaptermodulen zu einem höheren Gebilde zusammensteckbar ist, sodass die Höhe dieses Gebildes durch die Auswahl der Anzahl der zusammengesteckten Adaptermodule 17 in Stufen einstellbar ist.

Wie schon weiter oben erklärt ist bei bestimmungsgemäßer Anwendung des Messstabes in einem bestimmten Stadium der Arbeiten an jenem Höhenbereich der Längenmessskala 4, an welchem sich die Markierung 3 dann befindet, die Höhe einer über einem Punkt einer Rohfläche anzuordnenden Fußbodenstütze in üblichen Längenmaßeinheiten ablesbar. Durch die Stützelementeskala 14 ist dabei gleichzeitig auch sofort ablesbar, aus welchen und wie vielen Modulen 15, 16, 17 eine an dieser Stelle anzubringende Fußbodenstütze zusammenzusetzen ist, weil sich die Markierung 3 dann an einem dafür kennzeichnenden Höhenbereich der Stützelementeskala befindet.

Wenn sich die Markierung in dem mit "A" gekennzeichneten Höhenbereich der Stützelementeskala 14 befindet, ist das ebenfalls mit "A" gekennzeichnete niedrige Bodenmodul 15 allein zu verwenden.

Wenn sich die Markierung in dem mit "B" gekennzeichneten Höhenbereich der Stützelementeskala 14 befindet, ist das ebenfalls mit "B" gekennzeichnete hohe Bodenmodul 16 allein zu verwenden.

Wenn sich die Markierung in einem mit einer Ziffer gekennzeichneten Höhenbereich der Stützelementeskala 14 befindet, so ist das hohe Bodenmodul 16 in Kombination mit der durch die jeweilige Ziffer ausgedrückten Anzahl an Adaptermodulen 17 zu verwenden.

Durch die Stützelementeskala 14 entfällt also an Arbeiten auf der Baustelle das Umrechnen von üblichen Längenmaßen auf Art und Anzahl von Kombinationen von Modulen einer Fußstütze und auch das fallweise Herumprobieren mit verschiedenen Kombinationen der Module. Damit wird zügigeres, weniger ermüdendes und fehlerfreieres Arbeiten auf der Baustelle stark gefördert.

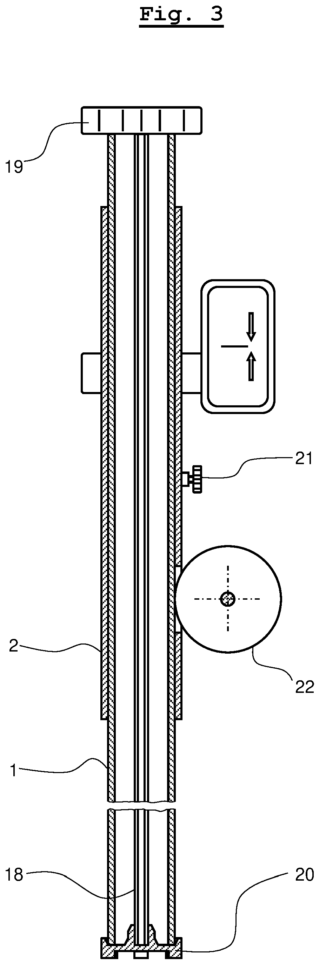

An Hand von Fig. 3 werden zwei weitere zusätzliche optionale Merkmale eines erfindungsgemäßen Messstabes näher erläutert:
Innerhalb des überwiegend als Hohlprofil ausgebildeten inneren, längeren Längsteils 1 erstreckt sich eine Welle 18, welche beispielsweise die Form eines Stabes mit Sechskantprofil haben kann. Am oberen Ende des inneren Längsteils 1 endet die Welle 18 in einem Griffrad 19, mit dem sie starr verbunden ist und welches für die den Messstab benutzende Person gut greifbar und um die Achse der Welle 18 drehbar ist. Am unteren Ende des inneren Längsteils 1 endet die Welle 18 in einem Adapter 20, welcher auf die Welle 18 derart aufsteckbar ist, dass er mit ihr bezüglich Drehbewegungen um die Achse der Welle 18 drehfest verbunden ist. Der Adapter 20 ist mit einer Eingriffsgeometrie ausgestattet, mit Hilfe derer er mit der jeweiligen Oberseite der Module 15, 16, 17 (Fig. 2), aus denen eine Fußbodenstütze zu bilden ist, drehfest bezüglich Drehung um die Achse der Welle 18 verbindbar ist. Damit wird erreicht, dass dann, wenn die aus einem oder mehreren der Module 15, 16, 17 bestehende Fußbodenstütze schon an ihrem Bestimmungsort auf einer Rohfläche aufgestellt ist, der Messstab mit dem Adapter 20 mit ihrer obersten Fläche verbunden werden kann und dann durch Drehung am Griffrad 19 die Höhe der Fußbodenstütze kontinuierlich verstellt werden kann. Idealerweise ist dabei die Verschiebbarkeit von innerem Längsteil 1 und äußerem Längsteil 2 des Messstabes aneinander blockiert - und zwar genau bei jener Stellung, bei der sich die am inneren Längsteil befestigte Markierung 3, deren Stellung bezüglich des inneren Längsteils 1 in einem weiter oben beschriebenen Arbeitsschritt festgelegt wurde, am Nullpunkt der Längenmaßskala 4 befindet. Während des Drehens des Griffrades 19 - und damit während des Höhenverstellens der Fußstütze - kann der weiter oben erwähnte Lasersender durchwegs in Betrieb sein und damit durchwegs die Annäherung der Sollmarkierung 12 bzw. des Nullpunktes der Längenmaßskala 4 an die durch die Laserstrahlen angezeigte Ebene überprüft werden. Für die arbeitende Person ist es damit nicht mehr nötig, sich für das Einstellen der Höhe der Fußstütze zu dieser hinunter zu beugen und während des Einstellvorganges das Kontrollieren der Höhe der Fußstütze zu unterbrechen. Damit wird extrem zügiges und entspanntes Arbeiten ermöglicht.

Anstelle eines händisch zu betätigenden Griffrades 19 oder auch zusätzlich zu diesem kann optional auch ein elektromotorischer Antrieb für das Drehen der Welle 18 angewendet werden.

Die Ausstattung eines Messstabes mit einer zu Drehbewegung antreibbaren Welle 18, welche unten in einem Adapter 20 für das Verdrehen von durch Gewinde höhenverstellbaren Stützfüßen endet, ist nicht nur bei Messstäben sinnvoll, welche die weiter oben beschriebenen Merkmale "Markierung und/oder eine Längenmaßskala in einstellbarer Höhe an einem der Längsteile lösbar fixierbar" und/oder "zur Längenmaßskala parallel verlaufende Stützelementeskala, auf welcher die dargestellten Längeneinheiten den wirksamen Längen der Module einer aus mehreren der Module zusammenfügbaren Fußstütze entsprechen" aufweisen, sondern auch bei Messstäben, die dieses Merkmal nicht aufweisen - wie beispielsweise die Eingangs zum Stand der Technik kurz beschriebenen Messstäbe. Diese Ausstattung ist sogar dann sinnvoll, wenn ein Messstab gar keine zwei aneinander geführten Längsteile aufweist, sondern nur einen einzigen mit einer Längenmaßskala ausgestatten Längsteil.

Das Blockieren der Verschiebbarkeit von innerem Längsteil 1 und äußerem Längsteil 2 aneinander kann beispielsweise mit Hilfe einer Verschraubung 21 erfolgen, welche eine Griffschraube und ein die Mantelfläche des äußeren Längsteils 2 durchdringendes Mutterngewinde umfasst.

Die Verschiebung von innerem Längsteil 1 und äußerem Längsteil 2 wird am vorliegenden Beispiel in vorteilhafter Weise durch ein Stellrad 22 bewirkt, welches um eine Achse drehbar ist, welche normal zu den Längsteilen 1, 2 ausgerichtet ist und starr mit dem äußeren Längsteil 2 verbunden ist. Das Stellrad 22 besteht zumindest an seinem äußeren Umfangsbereich aus einem gummielastischen Material mit hohem Reibungskoeffizienten. Die Mantelfläche des Stellrades 22 ragt durch eine Ausnehmung an der Mantelfläche des äußeren Längsteils 2 hindurch an eine Mantelflächenseite des inneren Längsteils 1 und liegt an dieser unter Druck zufolge elastischer Vorspannung an. Bei passender Auslegung - was im Rahmen des fachlichen Handelns leicht geschehen kann - wird damit erreicht, dass dann, wenn das Stellrad 22 von Hand aus gedreht wird, der äußere Längsteil 2 gegenüber dem inneren Längsteil 1 verschoben wird und, dass Verschiebebewegung der beiden Längsteile im Allgemeinen gestoppt ist, sobald nicht am Stellrad 22 gedreht wird. Durch das Stellrad 22 wird also eine komfortable Verschiebbarkeit und Einstellbarkeit der Positionen der beiden Längsteile 1, 2 zueinander erreicht.

## Patentansprüche

1. Messstab zur Verwendung in einem Lasernivellierungssystem, wobei der Messstab einen inneren Längsteil (1) aufweist sowie einen äußeren Längsteil (2), dessen Mantelfläche die Mantelfläche eines inneren Längsteils (1) umschließt, wobei der äußere Längsteil (2) entlang des inneren Längsteils (1) längsverschiebbar ist, wobei an einem der Längsteile (1, 2) eine Markierung (3) angebracht ist und sich entlang der Längsrichtung des anderen der Längsteile (2, 1) eine Längenmaßskala (4) erstreckt, wobei sich die Markierung (3) am einen Längsteil (1, 2) bezüglich der Position in Längsrichtung des anderen Längsteils (2, 1) in jenem Längsbereich befindet, an welchem sich auch die Längenmaßskala (4) am anderen Längsteil (2, 1) befindet, und wobei die Markierung (3) und die Längenmaßskala (4) gemeinsam sichtbar sind, wobei die Markierung (3) am einen Längsteil (1, 2) in Längsrichtung dieses Längsteils verschiebbar und an wählbaren Positionen lösbar fixierbar ist und/oder, dass die Längenmaßskala (4) am anderen Längsteil (2, 1) in Längsrichtung dieses anderen Längsteils (2, 1) verschiebbar und an wählbaren Positionen lösbar fixierbar ist,
**dadurch gekennzeichnet, dass**
er eine zur Längenmaßskala (4) parallel verlaufende Stützelementeskala (14) aufweist, auf welcher die dargestellten Längeneinheiten den wirksamen Längen der Module (15, 16, 17) einer aus mehreren der Module zusammenfügbaren Fußstütze entsprechen.

2. Messstab nach Anspruch 1, **dadurch gekennzeichnet, dass** die Markierung (3) am inneren Längsteil (1) in Längsrichtung verschiebbar und an wählbaren Positionen lösbar fixierbar ist und, dass die Längenmaßskala (4) am äußeren Längsteil (2) nicht verschiebbar angebracht ist.

3. Messstab nach Anspruch 1 oder Anspruch 2, **dadurch gekennzeichnet, dass** er auf jenem Längsteil (2), an welchem die Längenmaßskala (4) angebracht ist, eine Versatzmaßskala (13) aufweist, wobei die Versatzmaßskala (13) vom Nullpunkt der Längenmaßskala (4) aus in die entgegengesetzte Richtung der Längenmaßskala (4) verläuft.

4. Messstab nach einem der Ansprüche 1 bis 3, **dadurch gekennzeichnet, dass** der innere Längsteil (1) einen in seiner Längsrichtung verlaufenden Hohlraum aufweist, innerhalb dessen sich eine parallel zum inneren Längsteil (1) ausgerichtete Welle (18) erstreckt, die zu Drehung um ihre Achse antreibbar ist und welche an ihrem unteren Endbereich mit einem Adapter (20) drehfest verbunden ist.

5. Messstab nach Anspruch 4, **dadurch gekennzeichnet, dass** sich die Welle (18) bis an den oberen Endbereich des inneren Längsteils (1) erstreckt und dort mit einem Griffrad (19) drehfest verbunden ist.

6. Messstab nach einem der Ansprüche 1 bis 5, **dadurch gekennzeichnet, dass** er ein Stellrad (22) aufweist, welches um eine Achse drehbar ist, welche normal zu den Längsteilen (1, 2) ausgerichtet ist und starr mit dem äußeren Längsteil (2) verbunden ist, wobei das Stellrad (22) an seinem äußeren Umfangsbereich aus einem gummielastischen Material mit hohem Reibungskoeffizienten besteht und die Mantelfläche des Stellrades (22) durch eine Ausnehmung an der Mantelfläche des äußeren Längsteils (2) hindurch an eine Mantelflächenseite des inneren Längsteils (1) ragt und dort unter Druck zufolge elastischer Vorspannung anliegt.
